## Europäisches Patentamt
## European Patent Office
## Office européen des brevets

(19)

(11) Publication number: **O 027 783**
**B1**

(12) # EUROPEAN PATENT SPECIFICATION

(45) Date of publication of patent specification: **25.01.84**

(51) Int. Cl.³: **B 23 B  27/08, B 23 B  27/16**

(21) Application number: **80850147.2**

(22) Date of filing: **09.10.80**

(54) Cut-off tool.

<table>
<tr><td>

(30) Priority: **23.10.79 SE 7908751**

(43) Date of publication of application:
**29.04.81 Bulletin 81/17**

(45) Publication of the grant of the patent:
**25.01.84 Bulletin 84/4**

(84) Designated Contracting States:
**DE FR GB IT**

(56) References cited:
**DE - A - 1 552 334**
**DE - A - 2 201 237**
**DE - A - 2 510 960**
**FR - A - 1 204 054**
**FR - A - 1 562 462**
**FR - A - 1 562 463**
**FR - A - 2 020 138**
**GB - A - 1 255 494**
**GB - A - 1 532 238**
**US - A - 3 354 526**
**US - A - 3 613 197**

</td><td>

(56) References cited:
**TOOLING & PRODUCTION, vol. 44, no. 8, November 1978, published by Hueber Publication Inc. Solon, Ohio, US Gru-vex, page 212**

(73) Proprietor: **SANDVIK AKTIEBOLAG**
**S-811 81 Sandviken 1 (SE)**

(72) Inventor: **Roos, Axel Sven Olov**
**Odengatan 38**
**S-811 31 Sandviken (SE)**

(74) Representative: **Taquist, Lennart et al,**
**Sandvik AB Patents & Licences Fack**
**S-811 81 Sandviken 1 (SE)**

</td></tr>
</table>

Courier Press, Leamington Spa, England.

Cut-off tool

The present invention relates to a cutting tool and in particular to a tool for grooving and parting off operations, comprising a holder and a cutting insert releasably secured thereto, said insert being in the shape of a polygon the corners of which act as cutting corners.

In the art of metal cut-off the prior art used so far employs a holder to which a cut-off insert is releasably clamped. The clamping means used often include a lever type clamp actuatable by a screw engageable with the toolholder. The screw is usually actuatable from the top side of the tool and the longitudinal axis of the screw usually is oriented essentially perpendicular to the longitudinal direction of the clamp or the holder. Upon inscrewing said clamp screw the opposite free end of said clamp has been urged to press the insert against its bottom supporting surface in the holder.

Cut-off toolholders available heretofore equipped with similar clamping devices have been associated with certain disadvantages or limitations. The use of cutting tools for cut-off operations nowadays requires them to be able to take very narrow cuts or recesses in the workpiece. It is desirable that loss of material can be minimized, losses that can be substantial in amount for instance when cutting off extremely long bars into short pieces. Further, it is often necessary to have the tool mounted in up-and-down position in the pertaining machine. It should be understood that use of a top clamp acting on the insert puts a lower limit upon the minimum width of the recess produced by such a tool and, furthermore, that use of such top clamp is undesirable if the tool is required to be used in up-and-down position.

It is prior art, as disclosed in German patent specification 1.552.334, to have an indexable insert releasably secured to a copying tool holder by means of a screw passing centrally through a bore of the insert and threadably engaging a transverse bore in the holder whereby said insert has a cutting section and an integral protrusion. This holder is, however, not intended for cut-off operations at all since its foremost portion does not clearly extend any specific distance in front of the foremost end surface of the holder.

It is prior art, as disclosed in GB-A-1255494 and corresponding to the precharacterising part of claim 1, to have an indexable insert releasably secured to a holder by means of a screw passing centrally through a bore of the insert and threadably engaging a transverse bore in the holder whereby said insert has a central protrusion matching with a corresponding recess in the holder. Neither the protrusion, nor the insert itself has a regular polygonal shape and the insert has an upstanding portion proruding above the top face of the insert which is undesirable in cut-off operations.

It is an object of the present invention to provide a cut-off tool where above related deficiencies in prior tools are reduced or eliminated.

The tool of the present invention is defined in claim 1 and includes a holder and a cutting insert releasably secured to the fore end of said holder, said insert being in the shape of a regular polygon the central portion of which being a protrusion extending from the remainder of the insert, whilst having the same outer configuration as the insert, the polygon of said protrusion, however, being angularly offset from the polygon of the insert. This protrusion is adapted to act as an inside abutment surface to be located in abutment with an opposed side wall in a correspondingly shaped recess in the holder so oriented that one cutting edge of the insert extends parallel and flush with the top face of the holder. This enables to have only the corners of the insert exposed for cut-off operations without simultaneously being obliged to have these corner portions of the insert dimensioned for the cooperation with pertaining clamping means acting on the top side thereof. A considerable reduction in cut-off breadth is then achievable. At the same time this also enables the insert to be clamped laterally by means of a centre screw adapted to be threadably engaged with the holder from its side surface whilst having the top surface of the holder free from any protruding portions which is undesirable in cutting off operations.

The invention will now be described more in detail with reference to the accompanying drawing in which

Fig. 1 is a side view of a preferred embodiment of the cutoff tool of the present invention,

Fig. 2 is a side view of the tool in Fig. 1 without pertaining cut-off insert, and

Fig. 3 is a top view of the tool in Fig. 1.

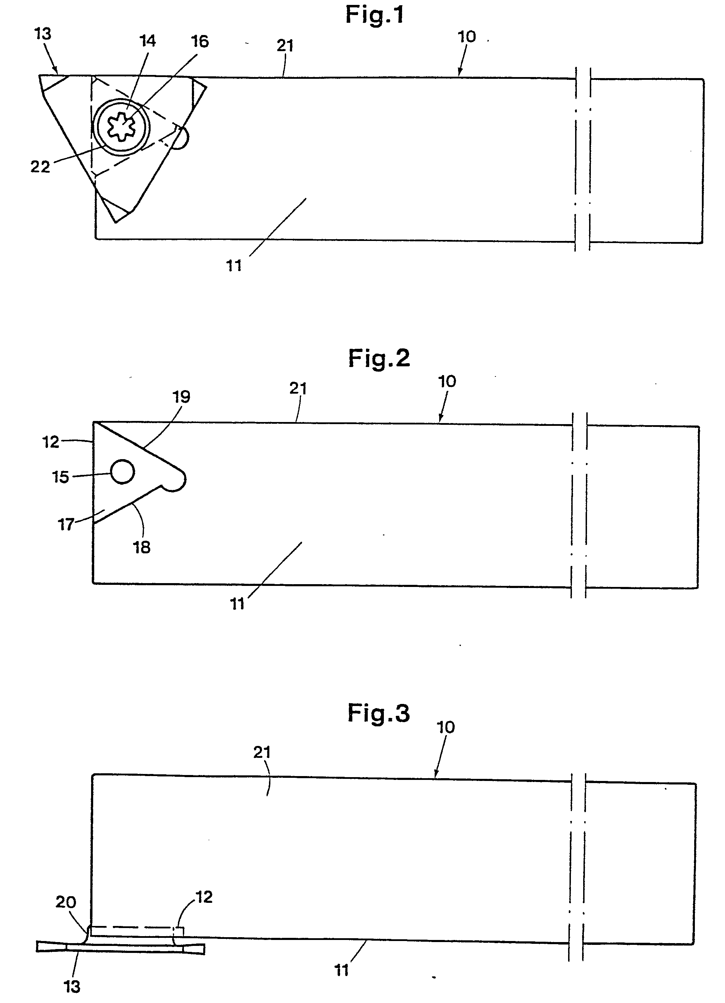

The tool shown in Figs. 1—2 comprises an elongated toolholder 10 square in cross section, thus comprising a top face, a bottom, two opposed longitudinally extending side faces generally parallel to each other, a front and a back, said holder at one side face 11 having a recess 12. A cutting insert 13 is located in said recess 12, whereby said cutting insert might consist of cemented carbide or any other similar material suitable for metal cutting purposes. The insert 13 is secured into said recess 12 by means of a centre screw 14, which passes through the insert and is threadably engageable with a transverse hole 15 provided in said holder. In order to enable simple turning and clamping the screw 14 is provided with a grip recess 16.

The recess 12 is confined by a base support surface 17, arranged in parallel with the plane of side surface 11 of the holer 10, and two angularly interrelated support surfaces 18 and 19 being arranged mainly perpendicular to support surface 17 whilst complementary to the shape of the insert 13.

The insert 13 is a polygonal in shape, in this preferred embodiment in the shape of an eqilateral triangle the corner portions of which are intended to act as cutting edges. The insert 13 is provided with a protruding central portion 20 which extends from the remainder of the insert. This central portion 20 has identical regular polygonal shape as the insert, said polygon, however, being angularly offset from the polygon of the insert. Only said central portion 20 of the insert is intended to be received in the recess 12, which, as appears from Fig. 1 is V-shaped.

One support surface 18 confining said recess 12 is inclined downwards towards the fore end of the holder 10, and both support surfaces 18 and 19 have their ends at the juncture with the fore end of the holder 10. The mutual orientation of said support surfaces 18 and 19 is such that a bisector to the angle between said surfaces 18 and 19 extends parallel with the longitudinal direction of the holder 10. Due to such orientation of said support surfaces 18 and 19 it has been found that the forces acting on said support surfaces 18 and 19 occurring from the pressure of the central portion 20 under the influence of the cutting forces are very moderate. It has to be understood, however, that deviations from the aforesaid interrelation of surfaces 18 and 19 might occur within the scope of the invention. In that connection it is recommended not to arrange support surface 18 such that is inclined upwards the fore end of the holder 10, which would result in there being an acute-angled material portion that would suffer most from the pressure occurring from said central portion 20 under the influence of the cutting forces that would reduce the strength of the tool. Further, it is preferable from strength and stability aspects to provide the central portion 20 with a greater thickness than the remainder of the insert.

With the embodiment shown in Figs. 1—2 the insert 13 is an equilateral triangle and the correspondingly shaped central portion 20 is angularly offset at an angle of 30°. Due to this the uppermost side edge of the insert 13, as seen in Fig. 1, will be arranged parallel and flush with the top surface 21 of the holder 10 and one side edge surface of said central portion 20 will be arranged perpendicular thereto. This result occurs from the arrangement with two support surfaces 18 and 19 that diverge forwards towards the fore end of the holder 10 and the bisector therebetween extending parallel with the longitudinal direction of the holder. The manner of clamping the insert into the holder, i.e. by means of a screw engageable from the side of the holder into a laterally extending central hole 22 of the insert 13 also renders the top surface of the tool free from any protruding screw or clamping means, thus avoiding undesirable disturbance in the chip flow rearwardly.

**Claims**

1. A cutting tool for grooving and cut-off operations, comprising a tool holder (10) having a top face (21), a bottom face, two opposed longitudinally extending side faces generally parallel to each other, a front end and a back end, said tool holder (10) being provided on one of its side faces with a recess (12) confined by a base support surface (17) and side support surfaces (18, 19) upstanding therefrom, an indexable cutting insert (13) being releasably secured into said recess (12) by means of a centre screw (14) threadably engageable with a transverse bore (15) in the holder (10), the insert (13) comprising a cutting section and an integral protrusion (20) extending therefrom, the protrusion (20) being received in said recess (12), which recess is complementarily shaped with regard to said protrusion (20), characterized in that the cutting section is the shape of a regular polygon, the corners of which form cutting edges, said protrusion (20) having the same polygonal shape as said cutting section, but being angularly offset therefrom, whereby said recess is such that one cutting edge is coplanar with the top face (21) of said holder (10) and projects beyond the front end of the holder (10) so as to be suitable for grooving and cut-off operations.

2. Cutting tool as defined in claim 1, characterized in that the insert is in the shape of an equilateral triangle whereas said protrusion (20) has a corresponding triangular shape with 30° angular offset with regard to the shape of the cutting section of the insert.

3. Cutting tool as defined in claim 2, characterized in, that said recess (12) is in the shape of a V-shaped pocket, wherein the side support surfaces (18, 19) diverge forwards to the front of the holder such that the intermediate bisector extends parallel with the longitudinal direction of said holder and one side edge of the protrusion (20) is oriented perpendicular to the top face (21) of the holder.

**Revendications**

1. Outil de coupe destiné à des opérations de rainurage et de tronçonnage, comprenant un porte-outil (10) comportant une face supérieure (21), une face inférieure, deux faces latérales longitudinales opposées dans l'ensemble parallèles l'une à l'autre, une extrémité antérieure et une extrémité postérieure, ce porte-outil (10) étant pourvu, sur une de ses faces latérales, d'un évidement (12) délimité par une surface de support de base (17) et des surfaces de support latérales (18 et 19) qui se dressent à partir de la surface de base, un couteau rapporté à tranchants permutables (13) étant fixé de manière amovible dans l'évidement (12) au moyen d'une vis centrale (14) qui peut être vissée dans une forure transversale (15) dans le porte-outil (10), le couteau rapporté (13) comprenant une section de coupe et une saillie (20) qui en fait partie intégrante, la saillie (20) étant reçue dans l'évidement (12) dont la forme est complémentaire de celle de la saillie (20), caractérisé en ce que la section de coupe a la forme d'un polygone régulier dont les coins forment des tranchants, la saillie (20) ayant le même forme polygonale que la section de coupe, mais étant décalée angulairement de celle-ci et l'évidement étant tel qu'un tranchant soit situé dans le même plan que la face supérieure (21) du porte-outil (10) et fasse saillie au-delà de l'extrémité antérieure du porte-outil (10) de manière à se prêter à des opérations de rainurage et de tronçonnage.

2. Outil de couple suivant la revendication 1, caractérisé en ce que le couteau rapporté a la forme d'un traingle équilatéral tandis que la saillie (20) a une forme triangulaire correspondante présentant un décalage angulaire de 30° par rapport à la forme de la section de coupe du couteau.

3. Outil de coupe suivant la revendication 2, caractérisé en ce que l'évidement (12) a la forme d'un logement en V, dans lequel les surfaces de support latérales (18, 19) divergent vers l'avant du porte-outil de telle sorte que la bissectrice entre ces surfaces s'étende parallèlement à la direction longitudinale du porte-outil et qu'un bord latéral de la saillie (20) soit orienté perpendiculairement à la face supérieure (21) du porte-outil.

**Patentansprüche**

1. Schneidstahl für Auskehlungs- und Abstecharbeiten, bestehend aus einem Werkzeughalter (10) mit einer Oberseite (21), einer Unterseite, zwei gegenüberliegenden längs verlaufenden, einander im wesentlichen parallelen Seitenflächen, einem Vorderende und einem Hinterende wobei dieser Werkzeughalter (10) auf einer seiner Seitenflächen mit einer durch eine Bodenstützfläche (17) und darauf stehende Seitenstützflächen (18, 19) begrenzten Ausnehmung (12) versehen ist, wobei eine schaltbare Schneidplatte (13) mittels einer in eine Querbohrung (15) im Halter (10) einschraubbaren Zentralschraube (14) in dieser Ausnehmung (12) lösbar befestigt ist, wobei die Schneidplatte (13) aus einem Schniedeteil und einem von diesem vorspringenden und damit einstückigen, in jener Ausnehmung (12) aufgenommenen Ansatz (20) besteht, wobei die Ausnehmung eine diesem Ansatz (20) komplementäre Gestalt besitzt, dadurch gekennzeichnet, dass der Schneideteil als reguläres Vieleck ausgebildet ist, dessen Ecken Schneidkanten bilden, wobei dieser Ansatz (20) dieselbe vieleckige Gestalt wie jener Schneideteil aufweist, aber winkelmässig dagegen versetzt ist, wobei jene Ausnehmung so ausgebildet ist, dass eine Schneidkante mit der Oberseite (21) dieses Halters (10) in einer Ebene liegt und über dessen Vorderende vorsteht, damit sie für Auskehlungs- und Abstecharbeiten geeignet ist.

2. Schneidstahl nach Anspruch 1, dadurch gekennzeichnet, dass die Schneidplatte die Gestalt eines gleichseitigen Dreiecks aufweist, während jener Ansatz (20) eine entsprechende, gegenüber der Gestalt des Schneideteils der Schneidplatte um einen Winkel von 30° versetzte dreieckige Form besitzt.

3. Schneidstahl nach Anspruch 2, dadurch gekennzeichnet, dass diese Ausnehmung (12) die Gestalt einer V-förmigen Tasche aufweist, worin die Seitenstützflächen (18, 19) zur Vorderseite des Halters hin so auseinanderlaufen, dass die Winkelhalbierende dazwischen der Längsrichtung dieses Halters parallel verläuft und eine Seitenkante des Ansatzes (20) senkrecht zur Oberseite (21) des Halters ausgerichtet ist.

## Fig.1

## Fig.2

## Fig.3